**Europäisches Patentamt**

**European Patent Office**

**Office européen des brevets**

(11) Numéro de publication : **0 267 823 B1**

# FASCICULE DE BREVET EUROPEEN

(45) Date de publication du fascicule du brevet :
**27.02.91 Bulletin 91/09**

(51) Int. Cl.$^5$ : **G01B 17/02, G01W 1/00, B64D 15/20**

(21) Numéro de dépôt : **87402268.4**

(22) Date de dépôt : **12.10.87**

(54) Dispositif de détection de la présence de givre et/ou de mesure de l'épaisseur de givre par ultra-sons et sonde de givrage utilisable dans un tel dispositif.

(30) Priorité : **15.10.86 FR 8614320**

(43) Date de publication de la demande :
**18.05.88 Bulletin 88/20**

(45) Mention de la délivrance du brevet :
**27.02.91 Bulletin 91/09**

(84) Etats contractants désignés :
**DE ES GB IT NL SE**

(56) Documents cités :
**EP-A- 0 186 610**
**WO-A-85/05185**
**FR-A- 1 482 385**
**US-A- 3 858 438**
**US-A- 4 553 137**
**Grundlagen der Flugwetterkunde, Wolfgang Kühr, pages 94-95**

(73) Titulaire : **Office National d'Etudes et de Recherches Aérospatiales (O.N.E.R.A.) 29 Avenue de la Division Leclerc F-92320 Châtillon-sous-Bagneux (FR)**

(72) Inventeur : **Deom, Alain 20 à 28 Avenue de Lattre de Tassigny F-94230 Cachan (FR)**
Inventeur : **Garnier, Jean-Claude 9 Allée des Pris-Pris F-92320 Châtillon (FR)**
Inventeur : **Guffond, Didier 12 Rue de la Fosse Bazin F-92260 Fontenay Aux Roses (FR)**

(74) Mandataire : **Gorree, Jean-Michel et al Cabinet Plasseraud 84, rue d'Amsterdam F-75009 Paris (FR)**

**Description**

La présente invention concerne le domaine de la détection de la présence de givre par ultra-sons.

A l'heure actuelle, on utilise des sondes à magnéto-striction et des sondes à pression pour effectuer une détection qualitative du givre sur des ailes d'avion. Ces sondes présentent l'inconvénient de perturber l'écoulement de l'air autour de l'aile et de nécessiter la mise en oeuvre de pièces mobiles, donc fragiles, d'où une diminution de la fiabilité des systèmes de détection.

Par ailleurs, il est bien connu d'utiliser les vibrations ultrasonores pour analyser des matériaux, en particulier pour en mesurer l'épaisseur, et des tentatives ont été faites pour détecter la présence et/ou mesurer l'épaisseur du givre. Toutefois, les dispositifs connus ne fournissent pas d'information exploitable en temps réel.

Par le document EP-A-0186610, on connaît un dispositif destiné à la mesure de l'épaisseur de précipitations (c'est-à-dire de l'épaisseur d'une couche d'eau de pluie) sur une surface sensiblement plane telle qu'une piste d'aérodrome, une route, un toit d'immeuble, etc. ; cette précipitation peut être de la glace. Ce dispositif connu comprend, d'une part, une sonde qui comporte un transducteur ultrasonore de type piezoélectrique apte à engendrer une onde acoustique ultrasonore d'émission et à détecter des ondes acoustiques ultrasonores d'écho réfléchies par le givre, un capteur de givre placé en avant du transducteur ultrasonore et ayant une surface destinée à être exposée à l'atmosphère ambiante pour être éventuellement couverte de givre, et des moyens de retard acoustique, et, d'autre part, des moyens de commande de la sonde agencés pour fournir au transducteur ultrasonore des signaux électriques d'excitation afin de lui faire engendrer des ondes ultrasonores et pour détecter et traiter les signaux électriques d'écho à la sortie du transducteur ultrasonore.

Toujours dans le domaine de la mesure de l'épaisseur de la couche de givre, il est connu d'utiliser des sondes optiques ou opto-électroniques qui ont cependant pour principaux inconvénients d'obliger à employer des parois transparentes généralement en verre, donc fragiles, et surtout d'être limitées à la mesure d'épaisseurs faibles. On connaît également des sondes hyperfréquences qui ont pour inconvénients d'exiger un équipement complexe et de requérir des réglages soignés ; en outre, l'étalonnage en est délicat et, d'une façon générale, elles sont mieux adaptées à la détection de la présence du givre qu'à la mesure de son épaisseur. Enfin, on connaît des sondes vibrantes dont l'inconvénient est d'être fragiles et d'être limitées à la mesure d'épaisseurs de givre faibles (typiquement 5 mm).

En bref, aucun des types de sondes actuellement connues ne peut donner entière satisfaction pour la détection de la présence de givre.

L'invention a donc essentiellement pour but de proposer un dispositif original mettant en oeuvre les propriétés des vibrations ultrasonores, pour détecter la présence de givre, qui écarte les inconvénients présentés par les sondes de l'art antérieur.

A cette fin, conformément à un premier aspect de l'invention, un dispositif de détection de la présence de givre comprend, d'une part, une sonde qui comporte un transducteur ultrasonore de type piezoélectrique apte à engendrer une onde acoustique ultrasonore d'émission et à détecter des ondes acoustiques ultrasonores d'écho réfléchies par le givre, un capteur de givre placé en avant du transducteur ultrasonore et ayant une surface destinée à être exposée à l'atmosphère ambiante pour être éventuellement couverte de givre, et des moyens de retard acoustique, et, d'autre part, des moyens de commande de la sonde agencés pour fournir au transducteur ultrasonore des signaux électriques d'excitation afin de lui faire engendrer des ondes ultrasonores et pour détecter et traiter les signaux électriques d'écho à la sortie du transducteur ultrasonore, caractérisé :

– en ce que le capteur de givre est constitué en coton bakélisé ayant une impédance acoustique sensiblement différente de celle du givre et comprise entre $36 \times 10^5$ et $44 \times 10^5$ kg.m$^{-2}$.s$^{-1}$ ;

– en ce que les moyens de retard acoustique comprennent un élément de retard acoustique qui est inséré entre le transducteur et le capteur pour assurer le couplage et l'adaptation acoustiques entre le transducteur et le capteur et à séparer dans le temps l'onde ultrasonore d'émission et l'onde ultrasonore réfléchie, cet élément de retard acoustique ayant une impédance acoustique comprise entre $12 \times 10^6$ et $36 \times 10^6$ kg.m$^2$.s$^{-1}$ et étant constitué en une résine chargée de poudre de tungstène ayant une densité comprise entre 1,5 et 2 ;

– et en ce qu'un corps en un matériau thermiquement isolant assure l'assemblage du capteur, du transducteur et des moyens de retard acoustique.

Il est également souhaitable qu'un tel dispositif comporte des moyens de régulation thermique, comportant notamment un élément chauffant, du volume intérieur de la sonde.

Dans un mode de réalisation spécifique, la face frontale ou face active du capteur de givre est convexe.

Avantageusement, on peut prévoir que le capteur de givre soit réalisé sous forme d'une pièce fixable de façon amovible, notamment vissable, sur le corps.

Il est, en outre, avantageux que les susdits moyens de commande de la sonde comprennent un amplificateur à gain variable commandé par un signal à variation d'amplitude progressive, tel qu'une rampe, au moment de l'émission du signal ultrasonore, de manière que soit procurée une compensation automatique de l'affaiblissement du signal ultrasonore en fonction de l'épaisseur du givre et qu'on recueille un signal électrique de sortie ayant une amplitude approximativement constante quelle que soit l'épaisseur du givre.

Le dispositif agencé conformément à l'invention, d'une part, est spécifiquement prévu pour détecter la présence d'une couche de givre sur une surface et, d'autre part, il ne présente aucun des inconvénients des dispositifs de l'art antérieur (quelle qu'en soit la fonction) énoncés plus haut. Plus particulièrement, le dispositif de l'invention est équipé d'un capteur de conception rustique, donc peu fragile et fiable ; son temps de réponse est peu important (typiquement de l'ordre de 15 s pour un dépôt de givre d'épaisseur 0,1 mm) ; il est possible de prévoir une séquence automatique de test de bon fonctionnement, même en l'absence de givre.

Bien que le domaine d'utilisation du dispositif conforme à l'invention soit très étendu, une application particulièrement intéressante réside dans la détection de la présence de givre sur une aile d'avion ou analogue (notamment un bord d'attaque d'aile ou un profil d'aéronef), la sonde étant alors implantée dans un logement creusé dans ladite surface, la surface frontale du capteur de givre affleurant la surface en question. Outre les avantages susmentionnés liés à la structure du dispositif, un avantage supplémentaire réside dans le fait que cet agencement réduit au minimum la perturbation de l'écoulement d'air autour de l'aile ou du profil, contrairement à ce qui se produit avec d'autres types de sondes connus.

Une autre application qui semble particulièrement intéressante réside dans la détection de la présence de verglas sur une route ou analogue, la sonde étant alors disposée à l'extrémité d'un bras tournant.

Conformément à un second aspect de l'invention, il est prévu une sonde de givrage, utilisable notamment dans un dispositif tel qu'indiqué ci-dessus, comprenant un transducteur ultrasonore de type piezoélectrique apte à engendrer une onde acoustique ultrasonore d'émission et à détecter des ondes acoustiques ultrasonores d'écho réfléchies par le givre, un capteur de givre placé en avant du transducteur ultrasonore et ayant une surface destinée à être exposée à l'atmosphère ambiante pour être éventuellement couverte de givre et des moyens de retard acoustique, caractérisée en outre :

– en ce que le capteur de givre est constitué en coton bakélisé ayant une impédance acoustique sensiblement différente de celle du givre et comprise entre $36 \times 10^5$ et $44 \times 10^5$ kg.m$^{-2}$.s$^{-1}$ ;

– en ce que les moyens de retard acoustique comprennent un élément de retard acoustique qui est inséré entre le transducteur et le capteur pour assurer le couplage et l'adaptation acoustiques entre le transducteur et le capteur et à séparer dans le temps l'onde ultrasonore d'émission et l'onde ultrasonore réfléchie, cet élément de retard acoustique ayant une impédance acoustique comprise entre $12 \times 10^6$ et $36 \times 10^6$ kg.m$^2$.s$^{-1}$ et étant constitué en une résine chargée de poudre de tungstène ayant une densité comprise entre 1,5 et 2 ;

– et en ce qu'un corps en un matériau thermiquement isolant assure l'assemblage du capteur, du transducteur et des moyens de retard acoustique.

L'invention sera mieux comprise à la lecture de la description détaillée qui suit de certains modes de réalisation préférés donnés uniquement à titre d'exemples non limitatifs. Dans cette description, on se réfère aux dessins annexés sur lesquels :

– la fig. 1 est un schéma représentant un agencement simplifié pour un dispositif de détection de la présence de givre conforme à l'invention, la sonde de ce dispositif étant montrée en vue de côté en coupe longitudinale diamétrale et le reste du dispositif étant représenté sous forme d'un schéma synoptique à blocs ;

– la fig. 2 est un schéma synoptique à blocs plus détaillé que celui de la fig. 1 et représentant un dispositif de mesure de l'épaisseur du givre conforme à l'invention, la sonde étant identique à celle de la fig. 1 et étant représentée de façon simplifiée ; et

– la fig. 3 est un schéma simplifié représentant le montage d'une sonde d'un dispositif conforme à l'invention pour la détection de verglas sur une route.

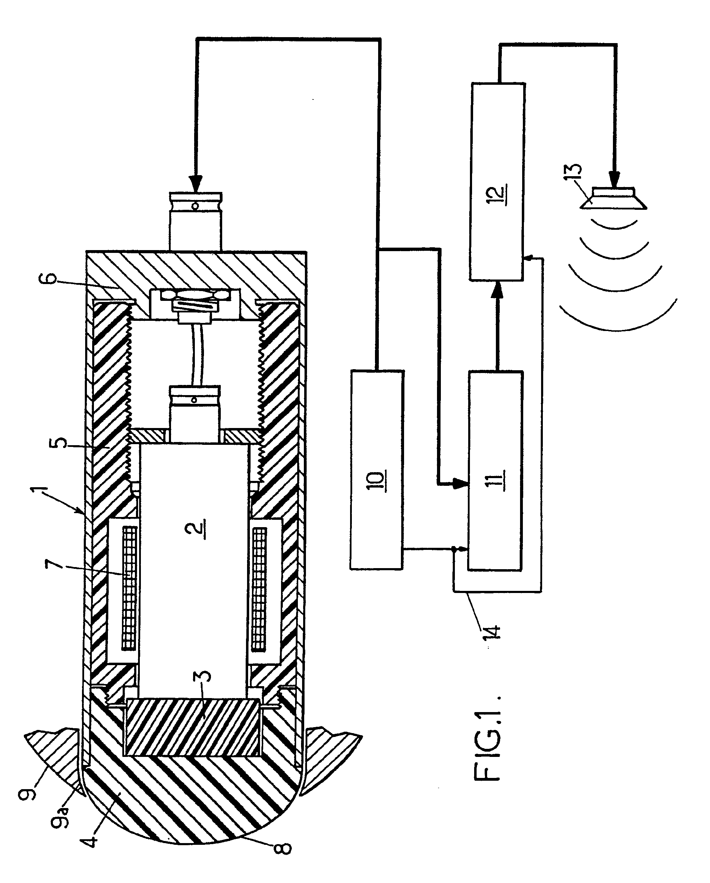

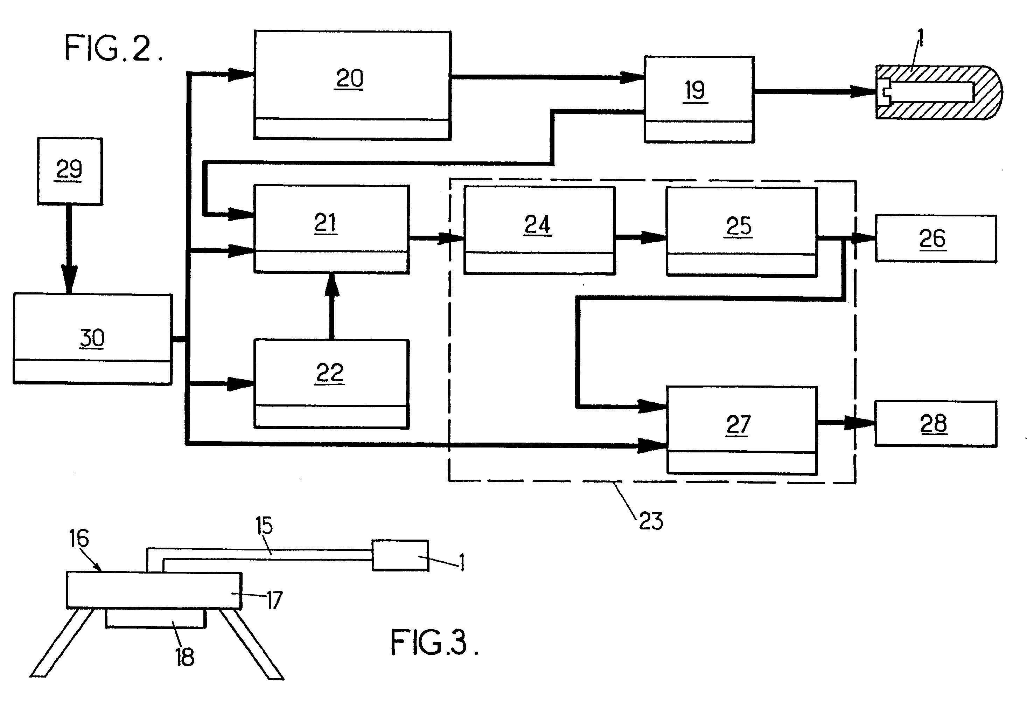

En se référant à la figure 1, on va tout d'abord décrire la structure de la sonde à ultrasons agencée selon l'invention et qui peut être incluse aussi bien dans un dispositif de détection de présence de givre (fig. 1) que dans un dispositif de mesure d'épaisseur du givre (fig. 2).

En bref, la sonde de givrage 1 est constituée des éléments suivants :

– un transducteur ultrasonore 2 destiné à engendrer l'onde acoustique ultrasonore d'émission, puis à détecter les échos acoustiques créés sur la face externe du matériau de captation ou du givre ;

– un élément de retard acoustique 3 qui réalise l'adaptation acoustique entre le transducteur 2 et le matériau de captation et qui sépare temporellement l'onde d'excitation du transducteur 2 de l'onde de retour (caractérisant le temps d'amortissement du transducteur) ;

– un capteur de givre 4, qui doit posséder une impédance acoustique proche de celle du givre ;

et

– un corps 5 qui sert d'élément de liaison pour les différentes pièces constitutives de la sonde et qui est usiné dans un matériau thermiquement isolant.

Un boîtier 6 entoure l'ensemble et assure sa protection mécanique.

De façon plus spécifique, les différents organes ci-dessus énumérés sont constitués de la manière suivante.

Le transducteur ultrasonore 2 est du type piézoélectrique. Typiquement, on peut utiliser un transducteur ayant une fréquence centrale de 2,25 MHz tel que celui commercialisé sous la référence V 106 par la société américaine Panametrics

L'élément de retard acoustique 3 interposé entre le transducteur 2 et le capteur 4 est constitué de deux manières différentes selon que la sonde est utilisée pour la détection de présence de givre ou pour la mesure de l'épaisseur du givre.

Dans le cas d'une détection de présence de givre, l'élément de retard est réalisé en un matériau ayant une impédance acoustique comprise entre celle du transducteur 2 et celle du capteur 4, c'est-à-dire comprise entre $12 \times 10^6$ et $36 \times 10^5$ kg.m$^{-2}$.s$^{-1}$. Un tel matériau peut être par exemple une résine (telle que celle commercialisée sous la marque Araldite) chargée de poudre de tungstène, ayant une densité de 1,5 à 2. L'épaisseur de matériau est de l'ordre de 1 à 2 cm. Dans le cas d'une mesure d'épaisseur du givre, l'élément de retard fait partie intégrante du capteur 4 et, dans ce cas, le capteur 4 est conformé pour occuper l'emplacement de la pièce 3 dans la sonde représentée à la fig.1.

Le capteur 4, qui se visse par exemple sur l'extrémité antérieure du corps de la sonde 5, est constitué lui aussi en deux matériaux différents selon l'utilisation prévue pour la sonde.

Dans le cas d'une détection de présence de givre, le capteur 4 est constitué en un matériau ayant une impédance acoustique sensiblement différente de celle du givre et comprise entre $36 \times 10^5$ et $44 \times 10^5$ kg.m$^{-2}$.s$^{-1}$. Typiquement on utilise un matériau dénommé "coton bakélisé" ayant une impédance acoustique d'environ $37 \times 10^5$ kg.m$^2$.s$^{-1}$, mais l'emploi de tout autre matériau ayant des propriétés acoustiques voisines ou identiques est possible.

Le corps isolant 5 est de préférence usiné dans une matière plastique assurant l'isolement thermique interne de la sonde, la bonne tenue aux contraintes thermiques auxquelles sera soumis le capteur (rétractation mécanique, fissuration, ...), la bonne tenue mécanique de l'ensemble (protection contre les déformations, les chocs, ...), la facilité de moulage et/ou d'usinage de ses diverses parties (pas de vis, précision dimensionnelle). Typiquement, on peut utiliser une matière plastique connue sous l'appellation ABS ou analogue.

Enfin, le boîtier 6 réalise l'interface de fixation de la sonde sur son support et sert de protection mécanique pour les éléments constitutifs de la sonde. Il peut aussi assurer la liaison mécanique d'assemblage entre le capteur 4 et le corps isolant 3, notamment par vissage ou par emmanchement à force.

En outre, pour éviter ou atténuer la sensibilité de la sonde aux variations de température ambiante, on peut avantageusement prévoir de l'équiper de moyens de régulation thermique de son volume intérieur. De tels moyens comprennent notamment un capteur de température (non visible sur la fig. 1) fournissant une information électrique variant avec la température et un élément chauffant 7 par exemple disposé autour du transducteur ultrasonore 2.

On notera, par ailleurs, que la face frontale ou face active (face de captation du givre) 8 du capteur 4 est convexe, avantageusement hémisphérique ou sensiblement hémisphérique lorsque le corps de la sonde est tubulaire, de manière à assurer la formation d'une couche de givre d'épaisseur sensiblement constante sur toute la surface exposée ; on évite ainsi la formation d'échos ultrasonores parasites résultant de variations d'épaisseur de la couche de givre et/ou d'aspérités présentes sur cette couche

Toujours en se référant à la fig. 1, on va maintenant décrire la structure générale simplifiée d'un dispositif de détection de présence de givre sur une paroi 9 (par exemple le bord d'attaque d'une aile d'avion), ce dispositif mettant en oeuvre la sonde 1 qui vient d'être décrite.

On remarquera tout d'abord que, dans l'exemple pris en considération, la sonde 1 est installée dans un logement 9a creusé dans la paroi 9, de manière telle que seule soit exposée à l'atmosphère ambiante la surface active 8 de la sonde, cette surface active affleurant la surface de la paroi 9 et assurant sensiblement la continuité du profil de cette paroi, ce qui réduit au minimum les perturbations de l'écoulement aérodynamique autour de la paroi 9.

La sonde 1 est raccordée, d'une part, à un émetteur ultrasonore 10 destiné à exciter le transducteur 2 au cours de la phase d'émission d'un signal ultrasonore et, d'autre part, à un récepteur-amplificateur 11 destiné à mettre en forme et amplifier les signaux électriques correspondants aux échos ultrasonores recueillis par le transducteur 2 au cours de la phase de réception, ces signaux étant ensuite sélectionnés par comparaison avec un seuil préétabli, dans un comparateur 12 dont la sortie commande un dispositif de signalisation approprié 13 (symbolisé sur la fig. 1 par une alarme sonore). Des liaisons appropriées 14 assurent la synchronisation du fonctionnement des différents circuits, notamment pour différencier les phases d'émission et de réception.

D'une façon générale, ces circuits sont constitués par une électronique peu complexe qui détecte les variations d'amplitude de l'écho recueilli par la sonde au cours de la phase de réception. Cette détection renseigne sur la présence de givre par comparaison avec l'amplitude du signal recueilli "à vide", c'est-à-dire correspondant à l'écho produit par la surface du capteur exempt de toute couche de givre

Un avantage important résultant de cette structure réside dans l'existence permanente d'un écho ultrasonore généré par la surface active 8 du capteur, qui renseigne sur le bon fonctionnement de la sonde indépendamment de la présence ou de l'absence de givre.

En raison de ses petites dimensions, la sonde peut être facilement disposée en un endroit où la formation de givre est favorisée (par exemple bord d'attaque d'une aile d'avion) afin d'améliorer le temps de réponse du dispositif de détection.

Un tel dispositif de détection peut également être utilisé pour détecter la présence de verglas, par exemple, sur une route. Comme représenté à la fig. 3, la sonde 1 est fixée à l'extrémité d'un bras 15 (ayant par exemple une longueur de 0,5 m), tournant ou oscillant par rapport à un support 16 renfermant le moteur d'entraînement 17 et l'électronique 18 de commande de la sonde. Grâce à ce montage, la sonde est animée d'un mouvement relatif par rapport au brouillard givrant : l'épaisseur de glace déposée peut ainsi être 100 fois à 1000 fois plus importante que sur une surface horizontale immobile

La mise en oeuvre de cet appareil de détection de verglas ne nécessite aucune mesure des paramètres météorologiques conditionnant l'apparition du verglas. De plus, la réponse de la sonde étant très rapide, une détection du verglas est possible avant que l'épaisseur de ce dernier ne soit important. De plus, l'amplification du phénomène de formation de glace procuré par la mobilité de la sonde permet de juger facilement de la sévérité du givrage et donc de la vitesse de formation du verglas. Enfin, un système d'alarme ou de dégivrage couplé au dispositif peut n'être déclenché que si l'épaisseur de la glace formée est relativement importante : le système est donc à même de différencier le verglas du givre blanc (lequel, étant provoqué par une condensation, n'est pas amplifié par le mouvement de la sonde).

En se référant à la fig. 2, on va maintenant décrire, d'une façon plus détaillée qu'en référence à la fig. 1, la structure générale d'un dispositif conforme à l'invention permettant d'effectuer la mesure de l'épaisseur de la couche de givre formée sur la surface 8 du capteur de la sonde et donc de détecter la formation de givre. En présence de givre, il n'existe pas d'écho ultrasonore dû à l'interface givre/capteur en raison de l'égalité sensible des impédances acoustiques du givre et du matériau constitutif du capteur. Par contre, on recueille un écho engendré par l'interface givre-air. L'électronique associée à la sonde convertit la translation temporelle de cet écho en mesure d'épaisseur de givre (selon une loi prédéterminée de correspondance temps-tension par exemple), la vitesse de propagation du signal ultrasonore étant connue par ailleurs.

La sonde 1, agencée comme expliqué plus haut en vue de la mesure de l'épaisseur du givre, est reliée, par l'intermédiaire d'un commutateur d'émission-réception 19, d'une part, à la sortie d'un générateur 20 d'impulsions électriques à la fréquence ultrasonore requise et à l'entrée d'un amplificateur à gain variable 21 dont le gain est commandé par le déclenchement d'un signal progressivement variable, telle qu'une rampe engendrée par un circuit 22, au moment de l'émission du signal ultrasonore. Ce montage permet de compenser le fait que l'écho est d'autant plus retardé et affaibli que l'épaisseur du givre est importante et cette compensation automatique permet de recueillir à la sortie de l'amplificateur 21 un signal ayant toujours sensiblement la même amplitude, compatible avec un seuil unique dont il est question plus loin.

La sortie de l'amplificateur 21 est raccordée à un circuit 23 de traitement du signal fournissant les indications recherchées concernant l'apparition du givre et l'épaisseur de la couche de givre.

Le circuit 23 peut comporter, comme représenté à la fig. 2, un circuit de filtrage 24, suivi d'un circuit de détection de seuil 25 à seuil unique comme indiqué plus haut dont le signal de sortie est traité, d'une part, par un circuit 26 pour fournir les indications relatives à la détection de conditions givrantes et, d'autre part, par un circuit 27 effectuant une conversion temps/tension dont le signal de sortie est utilisé en 28 pour fournir l'indication de l'épaisseur de la couche de givre.

Cet ensemble est synchronisé à partir d'un circuit de synchronisation comportant un oscillateur 29 et un diviseur de fréquence 30 raccordé au générateur 20, à l'amplificateur 21, au circuit 22 de commande de celui-ci et au convertisseur temps/tension 27.

Bien entendu, il ne s'agit là que d'un exemple de réalisation du circuit électronique associé à la sonde 1, et il est possible de concevoir cette commande sous d'autres formes, en particulier en utilisant un corrélateur du type à microprocesseur pour réaliser les fonctions assurées par le circuit 23.

Par rapport aux dispositifs déjà connus, le dispositif à sonde ultrasonore agencé conformément à l'invention procure des avantages importants résidant : dans la séparation des fonctions de détection de la présence de givre et de mesure de l'épaisseur du givre ; dans la rapidité de réponse ; dans la simplicité structurelle de la sonde qui est exempte d'organes mobiles et qui, moyennant une adaptation mineure du capteur, est susceptible d'être incorporée dans des supports de formes quelconques ; dans ses dimensions limitées liées à la taille du transducteur (typiquement diamètre 20 mm et longueur 50 mm) pour la sonde de mesure d'épaisseur et encore réductibles pour la sonde de détection de présence de givre. En outre, l'électronique associée à la sonde est peu complexe et le coût de l'ensemble est réduit.

## Revendications

1. Dispositif de détection de la présence de givre par ultrasons, comprenant, d'une part, une sonde (1) qui comporte un transducteur ultrasonore de type piezoélectrique (2) apte à engendrer une onde acoustique ultrasonore d'émission et à détecter des ondes acoustiques ultrasonores d'écho réfléchies par le givre, un capteur de givre (4) placé en avant du transducteur ultrasonore (2) et ayant une surface destinée à être exposée à l'atmosphère ambiante pour être éventuellement couverte de givre, et des moyens de retard acoustique (3), et, d'autre part, des moyens de commande de la sonde (10 à 14) agencés pour fournir au transducteur ultrasonore (2) des signaux électriques d'excitation afin de lui faire engendrer des ondes ultrasonores et pour détecter et traiter les signaux électriques d'écho à la sortie du transducteur ultrasonore, caractérisé :

    – en ce que le capteur de givre est constitué en coton bakélisé ayant une impédance acoustique sensiblement différente de celle du givre et comprise entre $36 \times 10^5$ et $44 \times 10^5$ kg.m$^{-2}$.s$^{-1}$ ;
    – en ce que les moyens de retard acoustique comprennent un élément de retard acoustique (3) qui est inséré entre le transducteur (2) et le capteur (4) pour assurer le couplage et l'adaptation acoustiques entre le transducteur (2) et le capteur (4) et à séparer dans le temps l'onde ultrasonore d'émission et l'onde ultrasonore réfléchie, cet élément de retard acoustique ayant une impédance acoustique comprise entre $12 \times 10^6$ et $36 \times 10^6$ kg.m$^2$.s$^{-1}$ et étant constitué en une résine chargée de poudre de tungstène ayant une densité comprise entre 1,5 et 2 ;
    – et en ce qu'un corps (5) en un matériau thermiquement isolant assure l'assemblage du capteur (4), du transducteur (2) et des moyens de retard acoustique (3).

2. Dispositif de détection de la présence de givre selon la revendication 1, caractérisé en ce qu'il comporte des moyens de régulation thermique, comportant notamment un élément chauffant (7), du volume intérieur de la sonde.

3. Dispositif de détection de la présence de givre selon la revendication 1 ou 2, caractérisé en ce que la face frontale ou face active (8) du capteur de givre (4) est convexe.

4. Dispositif de détection de la présence de givre selon l'une quelconque des revendications 1 à 3, caractérisé en ce que le capteur de givre (4) est réalisé sous forme d'une pièce fixable de façon amovible, notamment vissable, sur le corps (5)

5. Dispositif de détection de la présence de givre selon l'une quelconque des revendications 1 à 4, caractérisé en ce que les susdits moyens de commande de la sonde comprennent un amplificateur à gain variable commandé par un signal à variation d'amplitude progressive, tel qu'une rampe, au moment de l'émission du signal ultrasonore, de manière que soit procurée une compensation automatique de l'affaiblissement du signal ultrasonore d'écho en fonction de l'épaisseur du givre et qu'on recueille un signal électrique de sortie ayant une amplitude approximativement constante quelle que soit l'épaisseur du givre.

6. Dispositif de détection de la présence de givre sur une paroi telle qu'une aile d'avion ou analogue (9), caractérisé en ce qu'il comprend un dispositif selon l'une quelconque des revendications précédentes et en ce que la sonde (1) est implantée dans un logement (9a) creusé dans ladite paroi, la face frontale (8) du capteur du givre affleurant la surface en question, notamment le bord d'attaque de l'aile susmentionnée.

7. Dispositif de détection par ultrasons de la présence de verglas sur une route ou analogue, caractérisé en ce qu'il comprend un dispositif selon l'une quelconque des revendications 1 à 5 et en ce que la sonde est disposée à l'extrémité d'un bras mobile (15), notamment tournant ou oscillant.

8. Sonde de givrage à ultrasons, destinée notamment à être utilisée dans un dispositif de détection de la présence de givre selon l'une quelconque des revendications 1 à 7, comprenant un transducteur ultrasonore de type piezoélectrique (2) apte à engendrer une onde acoustique ultrasonore d'émission et à détecter des ondes acoustiques ultrasonores d'écho réfléchies par le givre, un capteur de givre (4) placé en avant du transducteur ultrasonore (2) et ayant une surface destinée à être exposée à l'atmosphère ambiante pour être éventuellement couverte de givre et des moyens de retard acoustique (3), caractérisée en outre :

    – en ce que le capteur de givre (4) est constitué en coton bakélisé ayant une impédance acoustique sensiblement différente de celle du givre et comprise entre $36 \times 10^5$ et $44 \times 10^5$ kg.m$^{-2}$.s$^{-1}$ ;
    – en ce que les moyens de retard acoustique (3) comprennent un élément de retard acoustique (3) qui est inséré entre le transducteur (2) et le capteur (4) pour assurer le couplage et l'adaptation acoustiques entre le transducteur (2) et le capteur (4) et à séparer dans le temps l'onde ultrasonore d'émission et l'onde ultrasonore réfléchie, cet élément de retard acoustique ayant une impédance acoustique comprise entre $12 \times 10^6$ et $36 \times 10^6$ kg.m$^2$.s$^{-1}$ et étant constitué en une résine chargée de poudre de tungstène ayant une densité comprise entre 1,5 et 2 ;
    – et en ce qu'un corps (5) en un matériau thermiquement isolant assure l'assemblage du capteur (4), du transducteur (2) et des moyens de retard acoustique (3).

## Ansprüche

1. Vorrichtung zum Erfassen des Vorhandenseins von Eisansatz durch Ultraschall, umfassend :
einesteils eine Sonde (1), welche ein Ultraschall-Leitstück (2) von piezoelektrischem Typ aufweist, um eine akustische Ultraschall-Emissionswelle zu erzeugen und um vom Eisansatz reflektierte, akustische Ultraschall-Echowellen zu erfassen, einen Eisansatz-Meßfühler (4), welcher vor dem UltraschallLeitstück (2) angeordnet ist und eine Oberfläche aufweist, welche dazu bestimmt ist, der umgebenden Atmospäre ausgesetzt zu sein, um gegebenenfalls mit Eisansatz bedeckt zu werden, und Mittel (3) zur akustischen Verzögerung und andernteils Steuerungsmittel (10 – 14) der Sonde, welche ausgebildet sind, um dem Ultraschall-Leitstück (2) elektrische Erregungssignale zu liefern, um es Ultraschall-Wellen erzeugen zu lassen und um die elektrischen Echo-Signale am Ausgang des UltraschallLeitstücks nachzuweisen und zu behandeln, dadurch gekennzeichnet, daß der Eisansatz-Meßfühler aus bakelisierter Baumwolle besteht, welche eine von derjenigen des Eisansatzes deutlich verschiedene und zwischen $36 \times 10^5$ und $44 \times 10^5$ kg m$^{-2}$ s$^{-1}$ enthaltene akustische Impedanz aufweist, daß die Mittel zur akustischen Verzögerung ein Element (3) zur akustischen Verzögerung umfassen, welches zwischen dem Leitstück (2) und dem Meßfühler (4) eingesetzt ist, um die akustische Kupplung und die akustische Anpassung zwischen dem Leitstück (2) und dem Meßfühler (4) sicherzustellen und um die Ultraschall-Emissionswelle und die reflektierte Ultraschall-Welle zeitlich zu trennen, wobei dieses Element zur akustischen Verzögerung eine zwischen $12 \times 10^6$ und $36 \times 10^6$ kg m$^{-2}$ s$^{-1}$ enthaltene akustische Impedanz aufweist und aus einem mit Wolfram-pulver beladenen Harz gebildet ist, welches ein zwischen 1,5 und 2 enthaltenes spezifisches Gewicht aufweist, und daß ein Körper (5) aus einem thermisch isolierendem Material die Zusammenfügung des Meßfühlers (4), des Leitstücks (2) und der Mittel zur akustischen Verzögerung (3) sicherstellt.

2. Vorrichtung zum Erfassen des Vorhandenseins von Eisansatz nach Anspruch 1, dadurch gekennzeichnet, daß die Vorrichtung Mittel zur thermischen Regelung des Innenraums der Sonde aufweist, welche insbesondere ein Heizelement (7) aufweisen.

3. Vorrichtung zum Erfassen des Vorhandenseins von Eisansatz nach Anspruch 1 oder 2, dadurch gekennzeichnet, daß die Frontfläche oder aktive Fläche (8) des Eisansatz-Meßfühlers (4) konvex ist.

4. Vorrichtung zum Erfassen des Vorhandenseins von Eisansatz nach einem der Ansprüche 1 bis 3, dadurch gekennzeichnet, daß der Eisansatz-Meßfühler (4) in Form eines am Körper (5) lösbar, insbesondere schraubbar, befestigbaren Stücks ausgebildet ist.

5. Vorrichtung zum Erfassen des Vorhandenseins von Eisansatz nach einem der Ansprüche 1 bis 4, dadurch gekennzeichnet, daß die Steuerungsmittel der Sonde einen Verstärker variablen Verstärkungsgrads enthalten, welcher durch ein Signal progressiver Amplitudenänderung, wie einer Rampe, im Moment der Emission des Ultraschallsignals gesteuert wird, derart, daß eine automatische Kompensation der Abschwächung des Ultraschall-Echosignals als Funktion der Dicke des Eisansatzes erzielt wird und man ein elektrisches Ausgangssignal gewinnt, welches unabhängig von der Dicke des Eisansatzes eine annähernd konstante Amplitude aufweist.

6. Vorrichtung zum Erfassen des Vorhandenseins von Eisansatz auf einer Wand, wie einem Flugzeugflügel (9) oder dergleichen, dadurch gekennzeichnet, daß die Vorrichtung eine Vorrichtung nach einem der vorhergehenden Ansprüche umfaßt und daß die Sonde (1) in eine in der Wand ausgebildete Ausnehmung (9a) eingesetzt ist, wobei die Frontfläche (8) des Eisansatz-Meßfühlers bündig mit der fraglichen Oberfläche, insbesondere der Stirnfläche des genannten Flügels, abschließt.

7. Vorrichtung zum Erfassen durch Ultraschall des Vorhandenseins von Glatteis auf einer Straße oder dergleichen mit Ultraschall, **dadurch gekennzeichnet**, daß sie eine Vorrichtung nach einem der Ansprüche 1 bis 5 umfaßt und daß die Sonde am äußeren Ende eines bewegbaren, insbesondere sich drehenden oder schwingenden, Arms (15) angeordnet ist.

8. Vereisungssonde mit Ultraschall, insbesondere, um in einer Vorrichtung zur Feststellung von Eisansatz nach einem der Ansprüche 1 bis 7 verwendet zu werden, umfassend :
eine Sonde (1), welche ein Ultraschall-Leitstück (2) von piezoelektrischem Typ aufweist, um eine akustische Ultraschall-Emissionswelle zu erzeugen und um vom Eisansatz reflektierte, akustische Ultraschall-Echowellen zu erfassen, einen Eisansatz-Meßfühler (4), welcher vor dem Ultraschall-Leitstück (2) angeordnet ist und eine Oberfläche aufweist, welche dazu bestimmt ist, der umgebenden Atmospäre ausgesetzt zu sein, um gegebenenfalls mit Eisansatz bedeckt zu werden, und Mittel (3) zur akustischen Verzögerung, außerdem dadurch gekennzeichnet, daß der Eisansatz-Meßfühler (4) aus bakelisierter Baumwolle besteht, welche eine von derjenigen des Eisansatzes deutlich verschiedene und zwischen $36 \times 10^5$ und $44 \times 10^5$ kg m$^{-2}$ s$^{-1}$ enthaltene akustische Impedanz aufweist, daß die Mittel zur akustischen Verzögerung ein Element (3) zur akustischen Verzögerung umfassen, welches zwischen dem Leitstück (2) und dem Meßfühler (4) eingesetzt ist, um die akustische Kupplung und die akustische Anpassung zwischen dem Leitstück (2) und dem Meßfühler (4) sicherzustellen und um die Ultraschall-Emissionswelle und die reflektierte Ultraschall-Welle zeitlich zu trennen, wobei dieses Element zur akustischen Verzögerung eine zwischen $12 \times 10^6$ und $36 \times 10^6$ kg m$^{-2}$ s$^{-1}$ enthaltene akustische Impedanz aufweist und aus einem mit Wolfram-Pulver beladenen Harz gebildet ist, welches ein zwischen 1,5 und 2 enthaltenes spezifisches Gewicht aufweist, und daß ein Körper (5) aus einem thermisch isolierendem Material die Zusammenfügung des Meßfühlers (4), des Leitstücks (2) und der Mittel zur akustischen Verzögerung (3) sicherstellt.

## Claims

1. A device for detecting the presence of frost by ultrasound, comprising, on the one hand, a probe (1) which comprises an ultrasonic transducer of the piezoelectric type (2) adapted to generate an ultrasonic acoustic emission wave and to detect ultrasonic acoustic echo waves reflected by the frost, a frost detector (4) placed in front of the ultrasonic transducer (2) and having a surface designed to be exposed to the surrounding atmosphere to be possibly covered with frost, and acoustic delay means (3), and on the other hand, actuating means (10-14) for the probe arranged to provide to the ultrasonic transducer (2) electrical energizing signals in order to cause said ultrasonic transducer to generate ultrasonic wave and to detect and process the electrical echo signals at the output of the ultrasonic transducer, characterized :

   - in that said frost detector is constituted of a Bakelite cotton material having an acoustic impedance substantially different from that of the frost and comprised between $36 \times 10^5$ and $44 \times 10^5$ kg.m$^{-2}$.s$^{-1}$ ;
   - in that said acoustic delay means comprises an acoustic delay element (3) which is inserted between the detector (4) and the ultrasonic transducer (2) so as to ensure acoustic coupling and adaptation between the transducer (2) and the detector (4) and to separate in time the ultrasonic emission wave and the ultrasonic reflected wave, said acoustic delay element having an acoustic impedance comprised between $12 \times 10^6$ and $36 \times 10^6$ kg.m$^{-2}$.s$^{-1}$, and being made of a resin filled with a tungsten powder having a density comprised between 1,5 and 2 ;
   - and in that a body (5) of heat insulating material covers an assembly of the detector (4), of the transducer (2) and of the acoustic delay means (3).

2. A device for detecting the presence of frost according to claim 1, characterized in that it comprises heat-regulating means, including particularly a heating element (7), for regulating the inside of the probe.

3. A device for detecting the presence of frost according to claim 1 or 2, characterized in that the front surface or active surface (8) of the frost detector (4) is convex.

4. A device for detecting the presence of frost according to anyone of claims 1 to 3, characterized in that the frost detector (4) is constituted as a part fixable removably, particularly screwable, to the body (5).

5. A device for detecting the presence of frost according to anyone of claims 1 to 4, characterized in that said means for actuating the probe comprise a variable gain amplifier actuated by a signal of progressive amplitude variation, such as a ramp, at the moment of emission of the ultrasonic signal, so that it is procured automatic compensation of the weakening of the ultrasonic echo signal according to the thickness of the frost and an electrical output signal is collected having an amplitude approximately constant whatever the tickness of the frost.

6. A device for detecting the presence of frost on a surface such as an airplane wing or the like (9), characterized in that it comprises a device according anyone of preceding claims and that the probe (1) is implanted in a housing (9a) hollowed in said surface, the front surface (8) of the frost detector being flush with the respective surface, particularly the leading edge of the above-mentioned wing.

7. A device for the detection by ultrasound of the presence of glazed frost on a road or the like, characterized in that it comprises a device according to anyone of claims 1 to 5 and that the probe is arranged at the end of a movable arm (15), particularly a rotative or oscillatory arm.

8. An ultrasonic frost probe designed particularly for use in a device for detecting the presence of frost according to anyone of claims 1 to 7, comprising an ultrasonic transducer of the piezoelectric type (2) adapted to generate an ultrasonic acoustic emission wave and to detect ultrasonic acoustic echo waves reflected by the frost, a frost detector (4) placed in front of the ultrasonic transducer (2) and having a surface designed to be exposed to the surrounding atmosphere to be possibly covered with frost, and acoustic delay means (3), characterized further :

   - in that the frost detector (4) is constituted of a Bakelite cotton material having an acoustic impedance substantially different from that of frost and comprised between $36 \times 10^5$ and $44 \times 10^5$ kg.m$^{-2}$.s$^{-1}$ ;
   - in that said acoustic delay means comprise an acoustic delay element (3) which is inserted between the transducer (2) and the detector (4) so as to ensure the acoustic coupling and adaptation between the transducer (2) and the detector (4) and to separate in time the ultrasonic emission wave and the ultrasonic reflected wave, said acoustic delay means having an acoustic impedance comprised between $12 \times 10^6$ and $36 \times 10^6$ kg.m$^{-2}$.s$^{-1}$, and being made of a resin filled with a tungsten powder having a density comprised between 1,5 and 2 ;

— and in that a body (5) of a heat insulating material covers the assembly of the detector (4), of the transducer (2) and of the acoustic delay means (3).

FIG.1.

FIG.2.

FIG.3.